# EUROPEAN PATENT SPECIFICATION

(11) **EP 2 841 776 B1**
(45) Date of publication and mention of the grant of the patent: **01.03.2017**
(21) Application number: 13717845.5
(22) Date of filing: 16.04.2013
(51) Int. Cl.: F16B 19/06

(54) **FASTENER FOR AIRCRAFT STRUCTURES**
BEFESTIGUNGSELEMENT FÜR FLUGZEUGBAUTEILE
ORGANE DE FIXATION POUR STRUCTURES D'AÉRONEFS

(30) Priority: 27.04.2012 GB 201207351
(43) Date of publication of application: 04.03.2015
(73) Proprietor: Airbus Operations Limited, Bristol BS34 7PA (GB)
(72) Inventor: DOBBIN, Richard, Filton Bristol BS99 7AR (GB); STUCKEY, John, Filton Bristol BS99 7AR (GB)
(74) Representative: Paton, David William
(86) International application number: PCT/GB2013/050971
(87) International publication number: WO 2013/160659

(56) References cited:
- DE-U1-202005 021 268
- US-A- 3 561 102
- US-A- 4 425 067

## Description

The present invention is concerned with a fastener for aircraft structures. More specifically, the present invention is concerned with a fastener designed to have a combination of shear and pull out performance for fastened panels.

Mechanical fasteners, such as screws, are known in the art and are used in aircraft structures to attach panels together. Some screws have a tapered countersunk head which fits into a corresponding female countersunk formation in the outermost panel to provide a flush surface.

Known countersunk fasteners have a frustro-conical head having opposing straight tapered sides in cross-section. Countersunk heads of this form taper outwardly from the shaft to the end surface of the fastener where a recess is sometimes provided for engagement with a tool. Inclusive angles of the head between the tapered edges range from 90 to 130 degrees, with the majority around 100 degrees. Such fasteners are designed primarily to: (i) resist pull-out forces (i.e. the tendency of the fastened panels to separate and pull the fastener in an axial direction), (ii) to resist shear forces (i.e. the tendency of the panels to slide over one another).

Providing a countersunk fastener in which the head extends too far through the thickness of the outer panel can result in a "knife-edge" condition. This condition results from the small depth of axial bore near the fastener shaft, just below the countersunk head. Because of the low surface area of radial contact between the fastener and the panel, stress concentrations can develop in this region, causing damage to the panel.

In order to mitigate the effects of the "knife-edge" condition, rather than changing the characteristics of the fastener, a "two-thirds rule" is applied to limit the depth of the countersink to two-thirds of the panel thickness. It is generally accepted that by providing this one-third thickness where the bore of the outer panel is cylindrical (i.e. the bore is purely axial around the fastener shaft) the aforementioned stress concentration is avoided or minimised.

This is of course problematic if the outer panel is thin. In this case, various methods to overcome the knife edge condition are used. For example, the depth of the countersunk head may be reduced, and therefore the "two thirds rule" can still be adhered to. A problem with this approach is that the head of the fastener is made consequently smaller in diameter (assuming the countersink angle is kept constant). This smaller head diameter reduces the axial contact area with the panel, thus increasing the stresses on the panel and reducing the pull out strength of the fastener as the panel is more prone to failure.

An alternative approach is to use a larger countersink angle so as not to reduce the area of the fastener head. By increasing the angle from, say 100 degrees to 130 degrees, the fastener head can remain the same diameter but the countersunk region can be made shallower to allow the two thirds rule to be followed. However, this method is not ideal because the head itself is made weaker (the depth of material in the countersunk head is reduced) and thus the pull out resistance of the fastener itself is reduced.

Sharp changes in the angle between the shaft and the head also cause stress concentrations in the fastener and as such are undesirable.

A known fastener is shown in US 3 828 422 A.

What is required is a fastener suitable for aircraft applications which offers an improved method of eliminating the knife edge condition without significantly reducing pull-out strength of the assembly.

According to the invention there is provided a threaded, countersunk fastener according to claim 1.

Advantageously, the present invention offers a solution to the knife edge condition for thin panels without significantly reducing pull-out strength as follows. The diameter of the countersunk head must be made large to spread the reaction load from the pull-out load condition across the corresponding part of the panel (thus keeping stresses in the panel low). However, as mentioned, this invention is concerned with fastening thin panels, and therefore providing an uninterrupted 90 degree circle segment cross section from the shaft to the top of the head would not be possible as the head would be quite deep. As such, in order to provide a smooth, tangential transition from the shaft to the head, a small diameter first portion transitions into a large diameter second portion. This provides the smooth transition at the shaft, the large head at the tip, and eliminates sharp corners therebetween without making the head too deep.

The presence of the radiused first portion proximate the shaft also reduces the effects of the knife-edge condition because the inner wall of the bore as the shaft transitions into the head is primarily axially oriented. As such, the countersunk head can be made almost as deep (and even as deep) as the panel.

Preferably the first region is adjacent (i.e. joins) the shaft, more preferably a tangent of the first region is aligned with the shaft where it joins, i.e. it blends with the shaft diameter.

The first and second regions may be adjacent- i.e. joined. Preferably their tangents align where the regions meet.

Alternatively, the bugle head may comprise an intermediate region joining the first and second regions, in which the intermediate region gradually increases in radius from the first radius to the second radius. The intermediate region may describe an involute curve.

Preferably the second radius is at least two times the first radius.

The second radius may terminate at an end of the fastener head, or an end region may be provided between the second region and the end of the head opposite the shaft, the end region being curved oppositely to the first and second regions.

When installed, the bugle head may extend more than 2/3 of the thickness of the outer (countersunk) panel. The bugle head may also extend all the way through the thickness of the panel.

An example fastener in accordance with the present invention will now be described with reference to the following figures, in which:-
FIGURE 1 is a section view of a prior art countersunk fastener installed within a panel assembly;
FIGURE 2 is a section view of a first bugle head fastener in accordance with the present invention;
FIGURE 3 is a section view of a second bugle head fastener in accordance with the present invention; and
FIGURE 4 is a section view of the fastener of Figure 3 installed in a panel assembly.

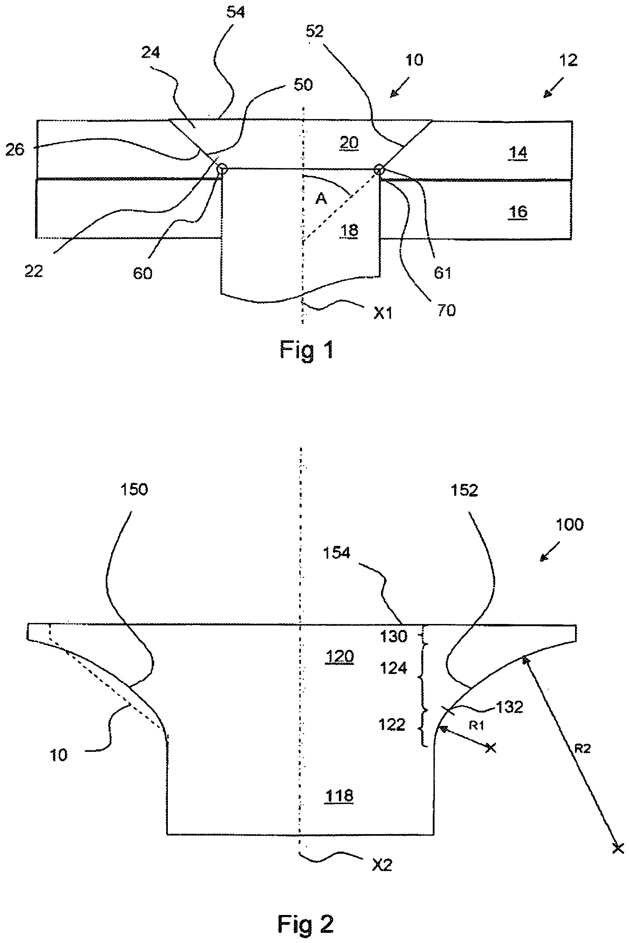

Referring to Figure 1, a known fastener 10 is installed in a panel assembly 12 comprising a first panel 14 and a second panel 16. The fastener 10 comprises a shaft 18 terminating in a countersunk head 20. The shaft 18 is generally cylindrical and may comprise, for example, a screw thread for attachment to the second panel 16. The fastener 10 is rotationally symmetric having a central axis X1.

The head 20 is frustro-conical and tapers from a first region 22 having a diameter equal to that of the shaft 18 and adjacent to the shaft 18, to a second region 24 having a diameter larger than the shaft 18 and terminating in an end (exposed) face 54. In cross section, the head 20 has edges or flanks 50 and 52, which are straight and angled with respect to the central axis X1. Each edge is at an angle A of 50 degrees to the axis Z1, thus forming a countersink angle of 100 degrees. Relatively sharp corners or very small radii 60, 61 are formed where the edges 50, 52 meet the shaft 18.

A corresponding countersunk bore 26 is provided within the first panel 14 in which the head 20 engages such that the outer surface of the panel is flush with the fastener head.

As can be seen, in the event that the panel 14 is thin, a very small axial portion 70 of the countersunk bore 26 is provided which results in stress concentrations in the panel 14. The aforementioned "two-thirds" seeks to mitigate this.

Turning to Figure 2, a fastener 100 in accordance with the present invention is shown. The fastener 100 comprises a shaft 118 which, as per fastener 10, may be threaded or have other appropriate mechanical features on it in order to fasten the fastener 100 to a panel assembly (usually a lower panel). The shaft 118 terminates in a countersunk head 120 having an exposed head face 154. The head 120 has a bugle profile in cross section. In cross-section, the head 120 has edges 150, 152. The edges are curved in a concave fashion from the shaft 118 to the face 154. As such, the head 120 has a bugle-like shape. The head 120 is rotationally symmetrical about a main axis of the fastener X2.

To demonstrate the difference between the fastener 100 and the fastener 10, the profile of the fastener 10 is shown in hidden line in Figure 2.

The bugle head 120 extends from a first region 122 into a second region 124. The first region 122 begins with an axial diameter equal to that of the shaft 118. The bugle head then smoothly and outwardly tapers with a profile having a radius R1. The first section 122 and the second section 124 join and the second section 124 continues with a radius of R2. It will be noted that R2 is significantly larger than R1. In this instance R1 is approximately 1.5mm in radius, whereas R2 is 5.47mm in radius. The second region 124 terminates in an end region 130, having axially oriented edges to form a small cylindrical profile proximate the face 154.

The first and second portions 122, 124 are join at a join line 132. At this point, tangents to the radii R1 and R2 are aligned such that smooth transition from one radius to the other is formed. This means than a smooth curve is provided from the shaft 118 to the tip 154 without the head depth becoming excessive (i.e. if the head had a radius of R2 from shaft to tip).

It will be noted that when assembled with a panel, due to the curvature of the radius R1, an knife-edge condition is not formed at the panel lower surface because the transition from the shaft to the head is more gradual. More of the head is thereby able to take a predominantly radial load. As such, the fastener head 120 may extend to near the full depth of the top panel. Furthermore, the provision of a large radius R2 increases the contact area with the panel and means that the pull out resistance is much better than it would be simply with the radius of R1 alone. Therefore, the combination of the two radii help to improve and balance the overall mechanical requirements of the fastener 100.

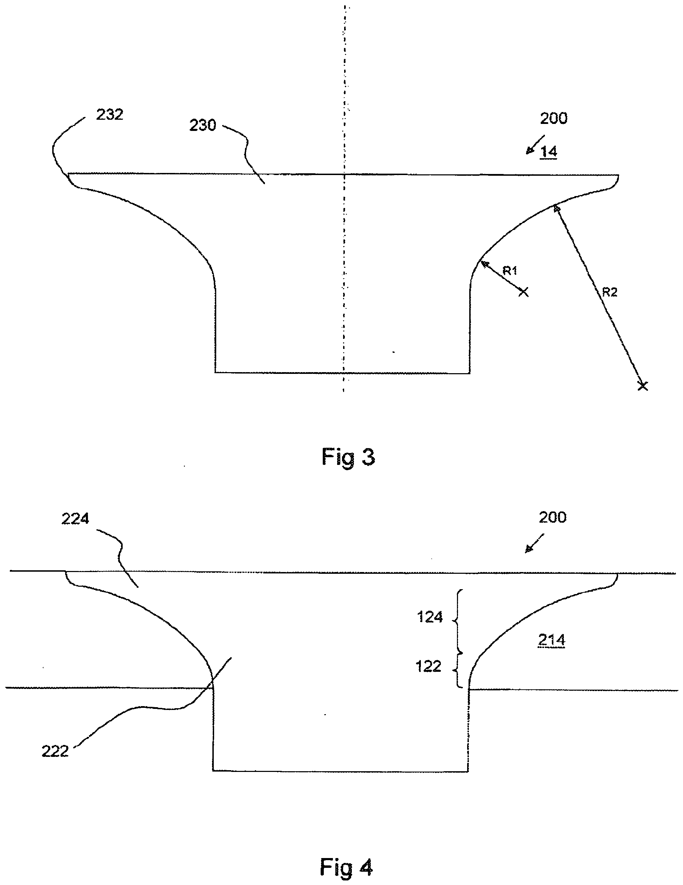

Turning to Figure 3, there is shown a second fastener 200 which is similar to the fastener 100, with the exception that instead of axial edges, an end region 230 comprises edges 232 which are radiused in an opposite direction to radii R1 and R2. This is beneficial for ensuring a good fit with the subject panel. It also means that the user does not have to have the end region 230 properly aligned with the countersunk bore in order to ensure a snug insertion of the fastener 200 because the curved profile "self aligns" as it is inserted.

Finally, turning to Figure 4, the fastener 200 is shown embedded in a panel 214. It will be noted that proximate a first region 222, the increase in the size of the countersunk bore is not significant due to the radius curvature of R 1. Further towards the surface of the panel 214 in the second region 224, radius R2 takes over and, as such, the countersunk bore can flare a lot more, increasing the maximum diameter of the head and improving pull out resistance.

The transition between radius R1 and R2 may occur in a number of manners. For example, an involute curve section may be provided to smoothly blend the radii R1 and R2.

Alternatively, the bugle head itself may only have involute curves on either side, but configured such that the instantaneous radius near the shaft is lower than the instantaneous radius at the tip of the head. In other words, the radius continuously increases as the curves progress towards the exposed surface of the fastener. This embodiment also falls within the scope of the present invention.

## Claims

1. A threaded, countersunk fastener (100) for an aircraft structure, the countersunk fastener comprising a shaft (118) having a bugle shaped head (120), and a thread, wherein the bugle shaped head (120) comprises:
a first concave region (122) proximate the shaft, the concave first region having a first radius of curvature; and **characterised by**
a second concave region (124) on the opposite side of the first region to the shaft, the second concave region having a second radius of curvature;
in which the second radius of curvature is larger than the first radius of curvature.

2. A threaded, countersunk fastener (100) according to claim 1, in which the first concave region is adjacent the shaft.

3. A threaded, countersunk fastener (100) according to claim 2, in which a tangent of the first concave region where it meets the shaft is aligned with the shaft.

4. A threaded, countersunk fastener (100) according to any preceding claim in which the first and second concave regions are adjacent.

5. A threaded, countersunk fastener (100) according to any of claims 1 to 3 in which the bugle head comprises an intermediate concave region joining the first and second concave regions, in which the intermediate concave region gradually increases in radius from the first radius to the second radius.

6. A threaded, countersunk fastener (100) according to claim 5 in which the intermediate concave region describes an involute curve.

7. A threaded, countersunk fastener (100) according to any preceding claim in which the second radius is at least two times the first radius.

8. A threaded, countersunk fastener (100) according to any preceding claim in which the second radius terminates at an end edge of the fastener head.

9. A threaded, countersunk fastener (100) according to any of claims 1 to 7 in which the bugle head comprises an end convex region between the second region and the end of the head opposite the shaft, the end convex region being curved oppositely to the first and second regions.

10. An assembly comprising:
an aircraft panel (214) defining a female countersunk bore; and,
a threaded, countersunk fastener (100) according to any of claims 1 to 9 embedded in the panel such that the bugle head (120) engages the female countersunk formation.

11. An assembly according to claim 10, in which the bugle head (120) extends more than 2/3 of the thickness of the aircraft panel (214).

12. An assembly according to claim 11, in which the bugle head (120) extends all the way through the thickness of the aircraft panel (214).

13. An assembly according to claim 12, in which the bugle head (120) joins the shaft at the lower surface of the upper panel surface.

14. An assembly according to any of claims 10 to 13, in which the bugle head (120) is flush with a surface of the panel.

## Patentansprüche

1. Gewinde-Senk-Befestigungselement (100) für eine Flugzeugstruktur, wobei das Senk-Befestigungselement einen Schaft (118) mit einem hornförmigen Kopf (120) und ein Gewinde umfasst, wobei der hornförmige Kopf (120) umfasst:
einen ersten konkaven Bereich (122) nahe dem Schaft, wobei der konkave erste Bereich einen ersten Krümmungsradius aufweist, und **gekennzeichnet durch**
einen zweiten konkaven Bereich (124) auf der dem Schaft abgewandten Seite des ersten Bereichs, wobei der zweite konkave Bereich einen zweiten Krümmungsradius aufweist,
wobei der zweite Krümmungsradius größer ist als der erste Krümmungsradius.

2. Gewinde-Senk-Befestigungselement (100) nach Anspruch 1, bei dem der erste konkave Bereich dem Schaft benachbart ist.

3. Gewinde-Senk-Befestigungselement (100) nach Anspruch 2, bei dem eine Tangente des ersten konkaven Bereichs, wo er mit dem Schaft zusammentrifft, mit dem Schaft ausgerichtet ist.

4. Gewinde-Senk-Befestigungselement (100) nach einem der vorherigen Ansprüche, bei dem der erste und der zweite konkave Bereich benachbart sind.

5. Gewinde-Senk-Befestigungselement (100) nach einem der Ansprüche 1 bis 3, bei dem der hornförmige Kopf einen konkaven Zwischenbereich umfasst, der den ersten und den zweiten konkave Bereich verbindet, wobei der konkave Zwischenbereich vom ersten Radius zum zweiten Radius allmählich zunimmt.

6. Gewinde-Senk-Befestigungselement (100) nach Anspruch 5, bei dem der konkave Zwischenbereich eine Evolvente beschreibt.

7. Gewinde-Senk-Befestigungselement (100) nach einem der vorherigen Ansprüche, bei dem der zweite Radius wenigstens das Zweifache des ersten Radius ist.

8. Gewinde-Senk-Befestigungselement (100) nach einem der vorherigen Ansprüche, bei dem der zweite Radius an einer Endkante des Befestigungselementkopfes endet.

9. Gewinde-Senk-Befestigungselement (100) nach einem der Ansprüche 1 bis 7, bei dem der hornförmige Kopf einen konvexen Endbereich zwischen dem zweiten Bereich und dem Ende des Kopfes gegenüber dem Schaft umfasst, wobei der konvexe Endbereich entgegengesetzt zum ersten und zweiten Bereich gekrümmt ist.

10. Anordnung, umfassend:
ein Flugzeugpaneel (214), das eine Senk-Aufnahmebohrung definiert, und
ein Gewinde-Senk-Befestigungselement (100) nach einem der Ansprüche 1 bis 9, derart eingebettet im Paneel, dass der hornförmige Kopf (120) mit der Senk-Aufnahmeformation in Eingriff kommt.

11. Anordnung nach Anspruch 10, bei der sich der hornförmige Kopf (120) mehr als 2/3 der Dicke des Flugzeugpaneels (214) erstreckt.

12. Anordnung nach Anspruch 11, bei der sich der hornförmige Kopf (120) vollständig durch die Dicke des Flugzeugpaneels (214) erstreckt.

13. Anordnung nach Anspruch 12, bei der der hornförmige Kopf (120) den Schaft an der unteren Seite der oberen Paneeloberfläche verbindet.

14. Anordnung nach einem der Ansprüche 10 bis 13, bei der der hornförmige Kopf (120) bündig mit der Oberfläche des Paneels ist.

## Revendications

1. Organe de fixation fraisé, fileté (100) pour une structure d'aéronef, l'organe de fixation fraisé comprenant un arbre (118) ayant une tête en forme de clairon (120), et un filetage, dans lequel la tête en forme de clairon (120) comprend :
une première région concave (122) à proximité de l'arbre, la première région concave ayant un premier rayon de courbure ; et étant **caractérisé par**
une seconde région concave (124) sur le côté opposé de la première région par rapport à l'arbre, la seconde région concave ayant un second rayon de courbure ;
dans lequel le second rayon de courbure est plus grand que le premier rayon de courbure.

2. Organe de fixation fraisé, fileté (100) selon la revendication 1, dans lequel la première région concave est adjacente à l'arbre.

3. Organe de fixation fraisé, fileté (100) selon la revendication 2, dans lequel une tangente de la première région concave où elle rencontre l'arbre est alignée avec l'arbre.

4. Organe de fixation fraisé, fileté (100) selon l'une quelconque des revendications précédentes, dans lequel les première et seconde régions concaves sont adjacentes.

5. Organe de fixation fraisé, fileté (100) selon l'une quelconque des revendications 1 à 3, dans lequel la tête en clairon comprend une région concave intermédiaire reliant les première et seconde régions concaves, dans lequel la région concave intermédiaire voit son rayon augmenter graduellement du premier rayon au second rayon.

6. Organe de fixation fraisé, fileté (100) selon la revendication 5, dans lequel la région concave intermédiaire décrit une courbe involutive.

7. Organe de fixation fraisé, fileté (100) selon l'une quelconque des revendications précédentes, dans lequel le second rayon équivaut à au moins deux fois le premier rayon.

8. Organe de fixation fraisé, fileté (100) selon l'une quelconque des revendications précédentes, dans lequel le second rayon prend fin au niveau d'un bord d'extrémité de la tête de l'organe de fixation.

9. Organe de fixation fraisé, fileté (100) selon l'une quelconque des revendications 1 à 7, dans lequel la tête en clairon comprend une région d'extrémité convexe entre la seconde région et l'extrémité de la tête opposée à l'arbre, la région d'extrémité convexe étant courbée de manière opposée aux première et seconde régions.

10. Ensemble comprenant :
un panneau d'aéronef (214) définissant un alésage femelle fraisé ; et,
un organe de fixation fraisé, fileté (100) selon l'une quelconque des revendications 1 à 9 intégré dans le panneau de sorte que la tête en clairon (120) vienne en prise avec la formation femelle fraisée.

11. Ensemble selon la revendication 10, dans lequel la tête en clairon (120) s'étend à plus du 2/3 de l'épaisseur du panneau d'aéronef (214).

12. Ensemble selon la revendication 11, dans lequel la tête en clairon (120) s'étend sur toute l'épaisseur du panneau d'aéronef (214).

13. Ensemble selon la revendication 12, dans lequel la tête en clairon (120) relie l'arbre au niveau de la surface inférieure de la surface du panneau supérieure.

14. Ensemble selon l'une quelconque des revendications 10 à 13, dans lequel la tête en clairon (120) affleure une surface du panneau.
